# EUROPÄISCHE PATENTSCHRIFT

(11) **EP 2 397 304 B1**
(45) Veröffentlichungstag und Bekanntmachung des Hinweises auf die Patenterteilung: **27.01.2016**
(21) Anmeldenummer: 10166670.9
(22) Anmeldetag: 21.06.2010
(51) Int. Cl.: B29C 47/08, F16H 3/72, B29C 47/40, F16H 37/06, B29B 7/46

(54) **Antriebsvorrichtung für einen gleichsinnig drehantreibbaren Doppelschneckenextruder**
Drive apparatus for a twin screw extruder with screws rotating in the same direction
Appareil d'entraînement pour une extrudeuse à double vis à vis tournant dans le même sens

(43) Veröffentlichungstag der Anmeldung: 21.12.2011
(73) Patentinhaber: Coperion GmbH, 70469 Stuttgart (DE)
(72) Erfinder: Aschbacher, Konstantin, 73104 Börtlingen (DE); Luckow, Agustin, 71149 Bondorf (DE); Schleicher, Raimund, 71672 Marbach (DE); Welb, Sören, 74360 Ilsfeld (DE)
(74) Vertreter: Rau, Albrecht

(56) Entgegenhaltungen:
- DE-A1- 10 315 200
- DE-B- 1 271 378
- US-A- 1 966 952
- US-A- 3 113 343
- US-A1- 2001 008 372
- US-A1- 2007 191 169

## Beschreibung

Die Erfindung betrifft eine Antriebsvorrichtung für einen gleichsinnig drehantreibbaren Doppelschneckenextruder gemäß dem Oberbegriff des Anspruchs 1.

Aus der DE 197 36 549 C2 ist eine Antriebsvorrichtung für einen Doppelschneckenextruder bekannt, mit der Leistungen von mehr als 15.000 kW übertragen werden können und gleichzeitig die Drehzahl der Schneckenwellen des Extruders in einem großen Bereich variiert werden kann. Hierzu weist die Antriebsvorrichtung ein Planetengetriebe mit zwei Eingangswellen auf, welche von einem Haupt-Antriebsmotor und einem Zusatz-Antriebsmotor drehantreibbar sind. Mit dem Planetengetriebe werden die Leistungen der beiden Antriebsmotoren überlagert. Ein dem Planetengetriebe nachgeordnetes Leistungsverzweigungsgetriebe teilt die überlagerte Gesamtleistung der Antriebsmotoren gleichmäßig auf zwei Ausgangswellen auf, die mit den Schneckenwellen des Extruders verbunden sind. Eine Betriebsmöglichkeit dieser Antriebsvorrichtung ist, dass der Haupt-Antriebsmotor mit einer festen Drehzahl läuft und die Drehzahl des drehzahlregelbaren Zusatz-Antriebsmotors überlagert wird, wobei über die Drehzahl des Zusatz-Antriebsmotors die Drehzahl der Schneckenwellen geregelt wird. Nachteilig bei dieser Antriebsvorrichtung ist, dass es aufgrund des Wunsches nach immer größeren Drehzahlen der Schneckenwellen im Planetengetriebe zu hohen Beschleunigungskräften in radialer Richtung kommt, die zu einer starken Belastung der Lager führen. Diese Belastung wirkt sich nachteilig auf die Lebensdauer der Antriebsvorrichtung aus und erfordert eine entsprechende Auslegung der Lager, was den Aufbau der Antriebsvorrichtung aufwendig macht.

Aus der US 2001/008 372 A1 ist eine Antriebsvorrichtung für einen gleichsinnig drehantreibbaren Doppelschneckenextruder bekannt, die zur Überlagerung der Antriebsleistungen von zwei Antriebsmotoren ein Planetengetriebe aufweist. Zwischen dem Planetengetriebe und einem Leistungsverzweigungsgetriebe ist ein Geschwindigkeitswechselgetriebe angeordnet, dessen Zahnräder zur Anpassung des Übersetzungsverhältnisses austauschbar sind.

Aus der DE 1 271 378 A ist eine Antriebsvorrichtung für eine Mehrfachschneckenpresse bekannt. Die Schnecken der Mehrfachschneckenpresse werden mittels der Antriebsvorrichtung gegensinnig drehangetrieben. Ein erster Antriebsmotor erzeugt eine Grundbewegung der Schnecken, wohingegen mit einem zweiten Antriebsmotor eine Oszillationsbewegung der Schnecken erzeugt und der Grundbewegung überlagert wird.

Aus der US 2007/191 169 A1 ist eine Antriebsvorrichtung für einen gleichsinnig drehantreibbaren Doppelschneckenextruder bekannt, die zur Überlagerung der Antriebsleistungen von zwei Antriebsmotoren ein Planetengetriebe aufweist.

Aus der DE 103 15 200 A1 ist ein Getriebe zum Antrieb eines Mehrwellenextruders bekannt. Die mit den Schneckenwellen verbundenen Abtriebswellen des Getriebes werden jeweils mit einem außenverzahnten Antriebsrad und einem innenverzahnten Hohlrad angetrieben.

Der Erfindung liegt die Aufgabe zugrunde, eine Antriebsvorrichtung der gattungsgemäßen Art derart weiterzubilden, dass mit einem kompakten und robusten Aufbau vergleichsweise höhere Drehzahlen der Schneckenwellen realisierbar sind.

Diese Aufgabe wird durch eine Antriebsvorrichtung mit den Merkmalen des Anspruchs 1 gelöst. Dadurch, dass das Überlagerungsgetriebe nicht als Planeten-Überlagerungsgetriebe, sondern als Differenzial-Überlagerungsgetriebe ausgebildet ist, wird im Vergleich zu einem Planeten-Überlagerungsgetriebe ein robusterer und kompakterer Aufbau erzielt, der höhere Drehzahlen der Schneckenwellen eines mit der Antriebsvorrichtung angetriebenen Doppelschneckenextruders ermöglicht. Es wurde erkannt, dass bei der aus der DE 197 36 549 C2 bekannten Antriebsvorrichtung hohe Beschleunigungskräfte auf die Radiallager der Planetenräder wirken, die aus der Rotation der Planetenräder um das zugehörige Sonnenrad resultieren. Dadurch, dass bei dem Differenzial-Überlagerungsgetriebe die den Planetenrädern entsprechenden Kegelräder um 90° gedreht angeordnet sind, wirken die Beschleunigungskräfte auf deren Axiallager, wodurch die Radiallager entlastet werden. Darüber hinaus rotieren die den Planetenrädern entsprechenden Kegelräder des Differenzial-Überlagerungsgetriebes in einem geringeren Abstand um die Drehachse des dem Sonnenrad entsprechenden Kegelrades, so dass einerseits die Beschleunigungskräfte in radialer Richtung auf die den Planetenrädern entsprechenden Kegelräder reduziert werden, wodurch das Differenzial-Überlagerungsgetriebe robust und verschleißarm ist, und andererseits ein vergleichsweise kompakterer Aufbau erzielt wird.

Der Aufbau des Differenzial-Überlagerungsgetriebes ist robust und einfach. Die Robustheit des Differenzial-Überlagerungsgetriebes wird erhöht, da die Leistungsüberlagerung auf mehrere Überlagerungs-Kegelräder gleichmäßig verteilt und deren Belastung dementsprechend reduziert wird.

Eine Antriebsvorrichtung nach Anspruch 2 ermöglicht eine einfache und robuste Kopplung einer der Überlagerungsgetriebe-Eingangswellen bzw. der Überlagerungsgetriebe-Ausgangswelle mit dem Differenzialkorb. Dies gilt insbesondere dann, wenn das Zahnrad als Stirnrad ausgebildet ist, da hierdurch hohe Drehmomente und/oder Drehzahlen übertragen werden können.

Eine Antriebsvorrichtung nach Anspruch 4 oder 5 ermöglicht eine flexible Anordnung der Antriebsmotoren bzw. des Leistungsverzweigungsgetriebes relativ zu dem Differenzial-Überlagerungsgetriebe.

Eine Antriebsvorrichtung nach Anspruch 6 ermöglicht eine übersetzungs- bzw. untersetzungsfreie Überlagerung der Antriebsleistungen der beiden Antriebsmotoren.

Eine Antriebsvorrichtung nach Anspruch 7 ermöglicht eine gezielte Drehzahl- und Drehmomentanpassung. Sofern das Zahnrad mit einem der Antriebsmotoren bzw. mit einer der Überlagerungsgetriebe-Eingangswellen gekoppelt ist, wirkt das Anpassgetriebe als Reduziergetriebe, so dass die Drehzahl des Differenzialkorbes kleiner als die Drehzahl des Zahnrades ist. Ist das Zahnrad mit der Überlagerungsgetriebe-Ausgangswelle gekoppelt, so kann je nach Bedarf die Drehzahl der Überlagerungsgetriebe-Ausgangswelle im Vergleich zu der Drehzahl des Differenzialkorbes erhöht oder erniedrigt werden.

Eine Antriebsvorrichtung nach Anspruch 8 ermöglicht auf einfache Weise eine Drehzahlreduktion der Drehzahl des mit dem Zahnrad gekoppelten Antriebsmotors. Das Anpassgetriebe wirkt somit als Reduziergetriebe, das die vergleichsweise hohe Drehzahl des zugehörigen Antriebsmotors auf die gewünschte Drehzahl der Schneckenwellen anpasst.

Eine Antriebsvorrichtung nach Anspruch 9 ermöglicht eine Drehzahlreduktion der Drehzahl des Antriebsmotors, der über eine der Überlagerungsgetriebe-Eingangswellen mit einem der Kegelräder gekoppelt ist. Hierdurch kann die vergleichsweise hohe Drehzahl dieses Antriebsmotors an die gewünschte Drehzahl der Schneckenwellen angepasst werden. Darüber hinaus ist die Belastbarkeit bzw. die Lebensdauer des Differenzial-Überlagerungsgetriebes höher, wenn die Leistung mit einem hohen Drehmoment und einer geringen Drehzahl übertragen wird. Die Ausbildung des Reduziergetriebes als Stirnradgetriebe erhöht zudem die Robustheit.

Eine Antriebsvorrichtung nach Anspruch 10 ermöglicht eine Drehzahlreduktion zwischen dem Differenzial-Überlagerungsgetriebe und dem Leistungsverzeigungsgetriebe. Hierdurch kann die vergleichsweise hohe Drehzahl an der Überlagerungsgetriebe-Ausgangswelle an die gewünschte Drehzahl der Schneckenwellen angepasst werden. Die Ausbildung des Reduziergetriebes als Stirnradgetriebe erhöht zudem die Robustheit.

Eine Antriebsvorrichtung nach Anspruch 11 ermöglicht einen äußerst einfachen Aufbau des Leistungsverzweigungsgetriebes. Weiterhin kann durch das Leistungsverzweigungsgetriebe eine Drehzahl- und Drehmomentanpassung erfolgen, da Übersetzungen bzw. Untersetzungen von ungleich 1 realisierbar sind. Die Leistungsverzweigungs-Zahnräder sind vorzugsweise als Stirnräder ausgebildet und gewährleisten somit eine hohe Robustheit des Leistungsverzweigungsgetriebes.

Eine Antriebsvorrichtung nach Anspruch 12 ermöglicht eine Drehzahlreduktion mittels des Leistungsverzweigungsgetriebes.

Eine Antriebsvorrichtung nach Anspruch 13 ermöglicht einen kompakten Aufbau des Leistungsverzweigungsgetriebes.

Eine Doppelschneckenextruder-Anordnung nach Anspruch 14 ist aufgrund der erfindungsgemäßen Antriebsvorrichtung robust und kompakt, insbesondere wenn der Doppelschneckenextruder mit vergleichsweise hohen Drehzahlen der Schneckenwellen betrieben wird.

Weitere Merkmale, Vorteile und Einzelheiten der Erfindung ergeben sich aus der nachfolgenden Beschreibung mehrerer Ausführungsbeispiele. Es zeigen:
- Fig. 1: eine Prinzipdarstellung einer Doppelschneckenextruder-Anordnung mit einer Antriebsvorrichtung gemäß einem ersten Ausführungsbeispiel der Erfindung,
- Fig. 2: eine Prinzipdarstellung eines Differenzial-Überlagerungsgetriebes der Antriebsvorrichtung in Fig. 1,
- Fig. 3: eine Prinzipdarstellung eines Leistungsverzweigungsgetriebes der Antriebsvorrichtung in Fig. 1,
- Fig. 4: eine Prinzipdarstellung des Differenzial-Überlageningsgetriebes einer Antriebsvorrichtung gemäß einem zweiten Ausführungsbeispiel,
- Fig. 5: eine Prinzipdarstellung des Differenzial-Überlageningsgetriebes einer Antriebsvorrichtung gemäß einem dritten Ausführungsbeispiel,
- Fig. 6: eine Prinzipdarstellung des Leistungsverzweigungsgetriebes einer Antriebsvorrichtung gemäß einem vierten Ausführungsbeispiel,
- Fig. 7: eine Prinzipdarstellung einer Doppelschneckenextruder-Anordnung gemäß einem fünften Ausführungsbeispiel, bei dem der Antriebsvorrichtung in Fig. 1 ein Reduziergetriebe vorgeordnet ist,
- Fig. 8: eine Prinzipdarstellung einer Doppelschneckenextruder-Anordnung gemäß einem sechsten Ausführungsbeispiel, bei dem zwischen dem Differenzial-Überlagerungsgetriebe und dem Leistungsverzweigungsgetriebe in Fig. 1 ein Reduziergetriebe angeordnet ist,
- Fig. 9: eine Prinzipdarstellung einer Doppelschneckenextruder-Anordnung mit einer Antriebsvorrichtung gemäß einem siebten Ausfühningsbeispiel,
- Fig. 10: eine Prinzipdarstellung einer Doppelschneckenextruder-Anordnung gemäß einem achten Ausfühningsbeispiel, bei dem der Antriebsvorrichtung in Fig. 9 ein Reduziergetriebe vorgeordnet ist, und
- Fig. 11: eine Prinzipdarstellung einer Doppelschneckenextruder-Anordnung gemäß einem neunten Ausführungsbeispiel, bei dem zwischen dem Differenzial-Überlagerungsgetriebe und dem Leistungsverzweigungsgetriebe in Fig. 9 ein Reduziergetriebe angeordnet ist.

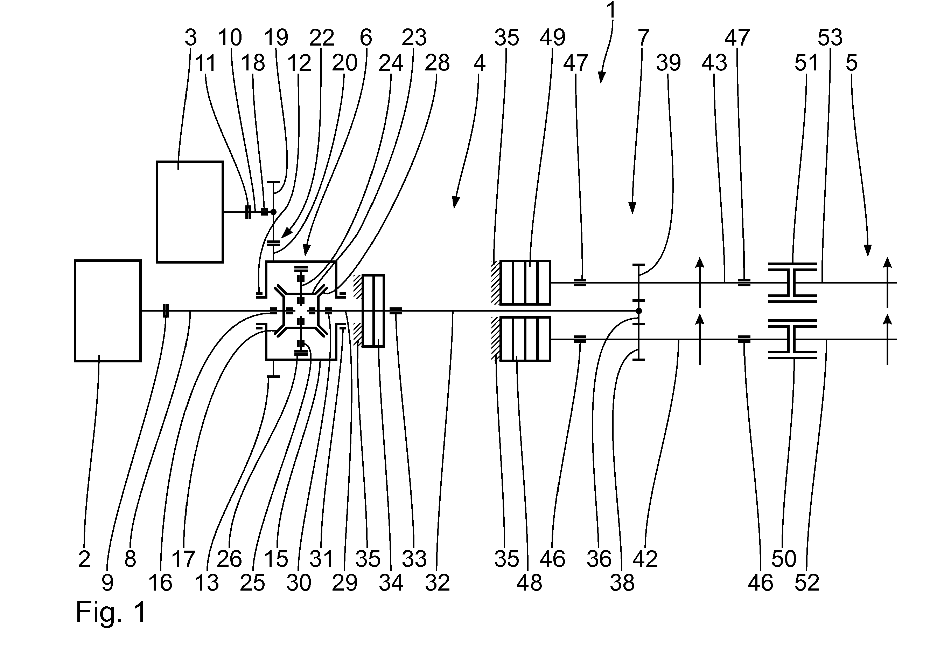

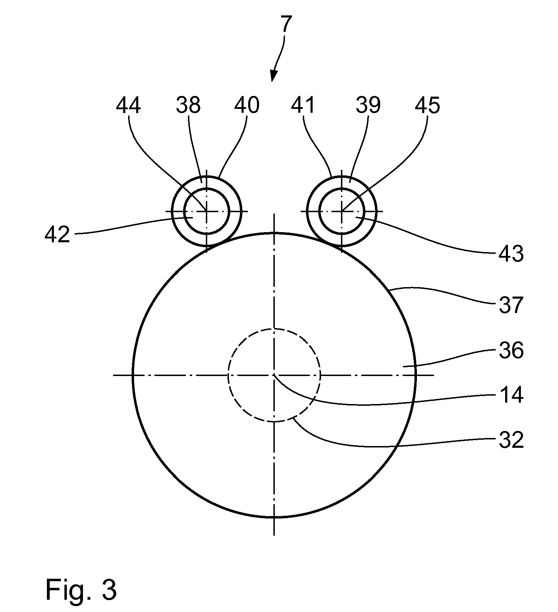

Nachfolgend wird unter Bezugnahme auf die Fig. 1 bis 3 ein erstes Ausführungsbeispiel der Erfindung beschrieben. Eine Doppelschneckenextruder-Anordnung 1 umfasst einen Haupt-Antriebsmotor 2 und einen Zusatz-Antriebsmotor 3, die über eine Antriebsvorrichtung 4 einen Doppelschneckenextruder 5 gleichsinnig drehantreiben.

Die Antriebsvorrichtung 4 weist ein Differenzial-Überlagerungsgetriebe 6 und ein nachgeordnetes Leistungsverzweigungsgetriebe 7 auf. Das Differenzial-Überlageningsgetriebe 6 umfasst eine erste Überlageningsgetriebe-Eingangswelle 8, die über eine Kupplung 9 mit dem Haupt-Antriebsmotor 2 gekoppelt ist. Weiterhin umfasst das Differenzial-Überlageningsgetriebe 6 eine zweite Überlageningsgetriebe-Eingangswelle 10, die über eine zweite Kupplung 11 mit dem Zusatz-Antriebsmotor 3 gekoppelt ist.

Die Eingangswelle 8 ist über ein Radiallager 12 in einem Getriebegehäuse 13 gelagert und mittels des Haupt-Antriebsmotors 2 um eine erste Drehachse 14 drehantreibbar. Die Eingangswelle 8 ist weiterhin durch einen Differenzialkorb 15 geführt und mittels eines Radiallagers 16 in diesem drehbar gelagert, wobei das freie Ende der Eingangswelle 8 mit einem ersten Kegelrad 17 verbunden ist. Der Differenzialkorb 15 ist um die erste Drehachse 14 drehbar.

Die Eingangswelle 10 ist über ein Radiallager 18 in dem Getriebegehäuse 13 gelagert und mit einem als Stirnrad ausgebildeten Zahnrad 19 verbunden. Das Zahnrad 19 ist über eine umfangsseitig an dem Differenzialkorb 15 angeordnete Verzahnung 20 in Eingriff mit diesem und mittels des Zusatz-Antriebsmotors 3 um eine zweite Drehachse 21 drehantreibbar, die parallel zu der ersten Drehachse 14 verläuft. Die Verzahnung 20 ist an einer der Eingangswelle 8 zugewandten Seite des Differenzialkorbs 15 angeordnet. Das Zahnrad 19 und die Verzahnung 20 bilden ein Anpassgetriebe 22 aus, das eine Übersetzung von 1 oder eine Übersetzung bzw. Untersetzung von ungleich 1 aufweisen kann. Mittels des Anpassgetriebes 22 erfolgt insbesondere eine Drehzahlanpassung derart, dass die Drehzahl des Differenzialkorbes 15 um die erste Drehachse 14 kleiner als die Drehzahl des Zahnrades 19 um die zweite Drehachse 21 ist.

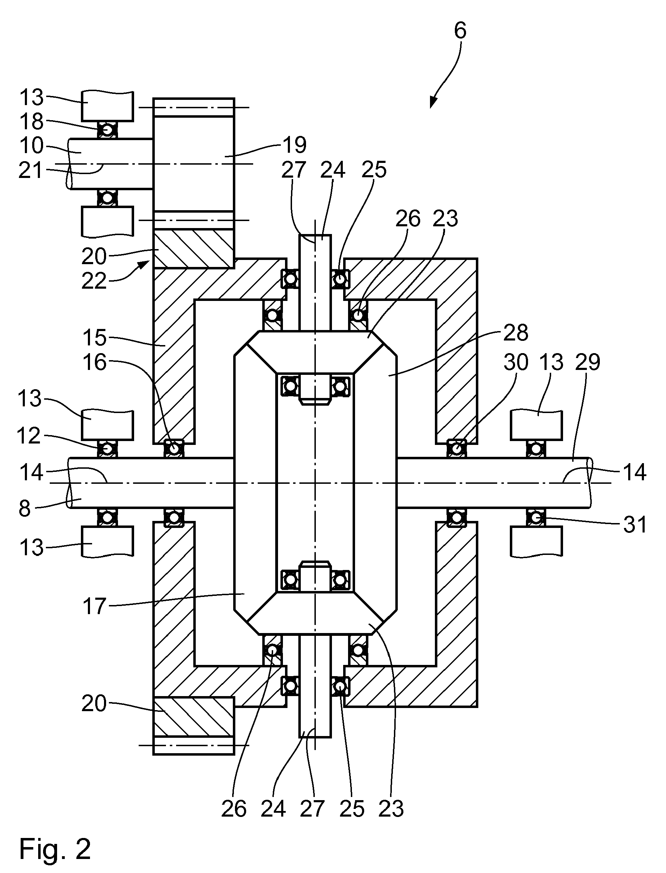

Das Differenzial-Überlageningsgetriebe 6 weist zur Überlagerung der Antriebsleistungen der Antriebsmotoren 2 und 3 vier Überlagenings-Kegelräder 23 auf, von denen in Fig. 2 lediglich zwei dargstellt sind. Die Überlagerungs-Kegelräder 23 sind mit einem Rotationswinkel von 90° rotationssymmetrisch um die erste Drehachse 14 angeordnet und an zugehörigen Wellen 24 befestigt. Die Überlagenings-Kegelräger 23 bzw. die zugehörigen Wellen 24 sind über jeweilige Radiallager 25 und Axiallager 26 um jeweilige dritte Drehachsen 27 drehbar an dem Differenzialkorb 15 umfangsseitig gelagert. Die dritten Drehachsen 27 verlaufen jeweils senkrecht zu der ersten Drehachse 14.

Die Überlagenings-Kegelräder 23 koppeln das erste Kegelrad 17 mit einem zweiten Kegelrad 28, das mit einer Überlagerungsgetriebe-Ausgangswelle 29 verbunden ist. Das zweite Kegelrad 28 ist gegenüberliegend zu dem ersten Kegelrad 17 und konzentrisch zu der ersten Drehachse 14 angeordnet, so dass dieses sowie die zugehörige Überlageningsgetriebe-Ausgangswelle 29 um die erste Drehachse 14 drehantreibbar sind. Die Ausgangswelle 29 ist entsprechend der Eingangswelle 8 über Radiallager 30 und 31 drehbar an dem Differenzialkorb 15 und dem Getriebegehäuse 13 gelagert.

Das Differenzial-Überlageningsgetriebe 6 weist zwischen dem ersten Kegelrad 17 und dem zweiten Kegelrad 28 sowie zwischen den Überlagerungs-Kegelrädern 23 und dem zweiten Kegelrad 28 jeweils betragsmäßig eine Übersetzung von 1 auf. Dies bedeutet, dass die Drehzahl der Eingangswelle 8 1:1 auf die Ausgangswelle 29 und die Drehzahl des Differenzialkorbs 15 um die erste Drehachse 14 1:1 auf die Ausgangswelle 29 übertragen werden.

Die Ausgangswelle 29 ist mit einer Leistungsverzweigungsgetriebe-Eingangswelle 32 verbunden, die über Radiallager 33 und Axiallager 34 in einem Getriebegehäuse 35 um die erste Drehachse 14 drehbar gelagert ist. Die Eingangswelle 32 kann auch einteilig mit der Ausgangswelle 29 ausgebildet sein.

An einem freien Ende der Eingangswelle 32 ist ein als Stirnrad ausgebildetes erstes Leistungsverzweigungs-Zahnrad 36 mit einer zugehörigen Außenverzahnung 37 angeordnet. Das erste Leistungsverzweiglings-Zahnrad 36 ist in Eingriff mit zwei als Stirnrädern ausgebildeten zweiten Leistungsverzweigungs-Zahnrädern 38, 39, die jeweils zugehörige Außenverzahnungen 40, 41 aufweisen. Die zweiten Leistungsverzweiglings-Zahnräder 38, 39 sind an zugehörigen Leistungsverzweigungs-Getriebe-Ausgangswellen 42, 43 befestigt, die um zugehörige Drehachsen 44, 45 drehantreibbar sind. Die Drehachsen 44, 45 verlaufen parallel zu der ersten Drehachse 14. Die Ausgangswellen 42, 43 sind über zugehörige Radiallager 46, 47 und Axiallager 48, 49 in dem Getriebegehäuse 35 gelagert.

Die Leistungsverzweigungsgetriebe-Ausgangswellen 42, 43 sind über zugehörige Anschlüsse 50, 51 mit Schneckenwellen 52, 53 des Doppelschneckenextruders 5 verbunden.

Das Differenzial-Überlageningsgetriebe 6 dient zur Leistungsüberlagerung der Antriebsleistungen des Haupt-Antriebsmotors 2 und des Zusatz-Antriebsmotors 3. Eine Betriebsweise der Doppelschneckenextruder-Anordnung 1 ist, dass der Haupt-Antriebsmotor 2 mit einer festen Drehzahl und der Zusatz-Antriebsmotor 3 drehzahlgeregelt betrieben werden. Die Drehzahl und das Drehmoment des Haupt-Antriebsmotors 2 werden aufgrund der Übersetzung 1 des Differenzial-Überlageningsgetriebes 6 unverändert von der Eingangswelle 8 auf die Ausgangswelle 29 übertragen. Die Drehzahl und das Drehmoment des Zusatz-Antriebsmotors 3 werden je nach Übersetzung bzw. Untersetzung des Anpassgetriebes 22 von der Eingangswelle 10 auf die Ausgangswelle 29 übertragen und der Drehzahl und dem Drehmoment des Haupt-Antriebsmotors 2 überlagert. Durch die Rotation des Differenzialkorbes 15 wirken auf die Überlagenings-Kegelräder 23 Beschleunigungskräfte in radialer Richtung, die im Wesentlichen von den Axiallagern 26 aufgenommen werden. Dadurch, dass die Überlagenings-Kegelräder 23 im Vergleich zu den Planetenrädern eines Planeten-Überlagerungsgetriebes um 90° gedreht angeordnet sind, werden die Radiallager 25 im Vergleich zu einem Planeten-Überlageningsgetriebe entlastet. Weiterhin ist der Abstand der Überlagenings-Kegelräder 23 von der ersten Drehachse 14 geringer als der vergleichbare Abstand der Planetenräder eines Planeten-Überlageningsgetriebes von der entsprechenden Drehachse, so dass die von den Axiallagern 26 aufzunehmenden Beschleunigungskräfte vergleichsweise geringer sind. Hierdurch können an der Ausgangswelle 29 im Vergleich zu einem Planeten-Überlageningsgetriebe bei vergleichbarer Belastung der Lager 25, 26 höhere Drehzahlen erzielt werden. Weiterhin ist der Aufbau des Differenzial-Überlagerungsgetriebes 6 kompakter als der eines Planeten-Überlagerungsgetriebes.

Die überlagerten Antriebsleistungen werden über das erste Leistungsverzweigungs-Zahnrad 36 von der Eingangswelle 32 auf die zweiten Leistungsverzweigungs-Zahnräder 38, 39 bzw. die zugehörigen Ausgangswellen 42, 43 gleichmäßig aufgeteilt, wobei die Ausgangswellen 42, 43 gleichsinnig rotieren. Der Aufbau des Leistungsverzweigungsgetriebes 7 ist einfach und kompakt, wobei mittels der Leistungsverzweigungs-Zahnräder 36, 38 und 39 je nach gewünschter Übersetzung bzw. Untersetzung das Drehmoment und die Drehzahl an den Ausgangswellen 42, 43 und dementsprechend an den Schneckenwellen 52, 53 angepasst werden können.

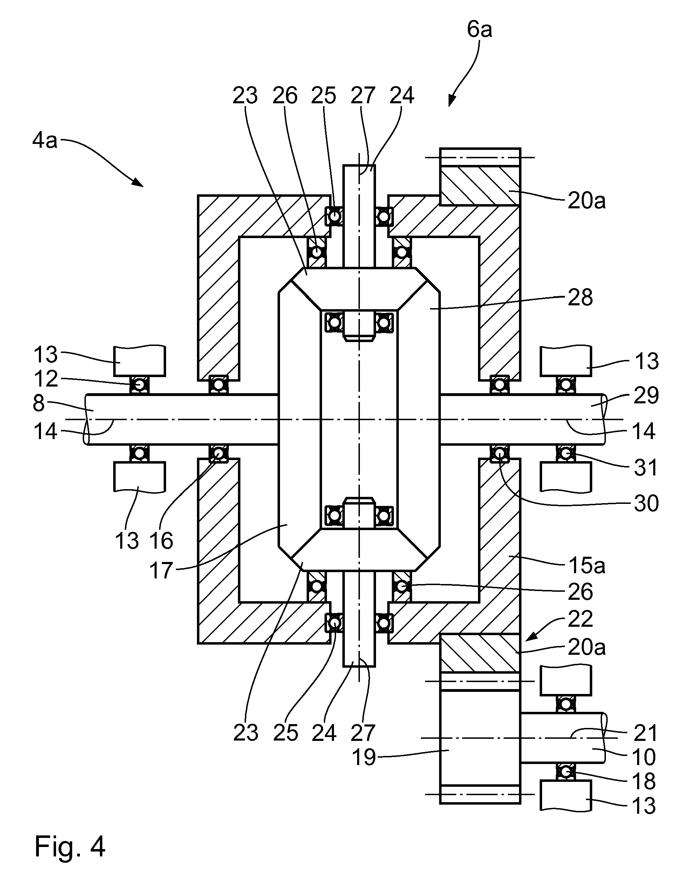

Nachfolgend wird unter Bezugnahme auf Fig. 4 ein zweites Ausfühningsbeispiel der Erfindung beschrieben. Im Unterschied zu dem ersten Ausführungsbeispiel ist die Verzahnung 20a an einer der Eingangswelle 8 abgewandten Seite des Differenzialkorbes 15a angeordnet. Hierdurch können die Antriebsmotoren 2 und 3 an gegenüberliegenden Seiten des Differenzial-Überlagerungsgetriebes 6a bzw. der Antriebsvorrichtung 4a angeordnet werden. Hinsichtlich der weiteren Funktionsweise wird auf das erste Ausfühmngsbeispiel verwiesen.

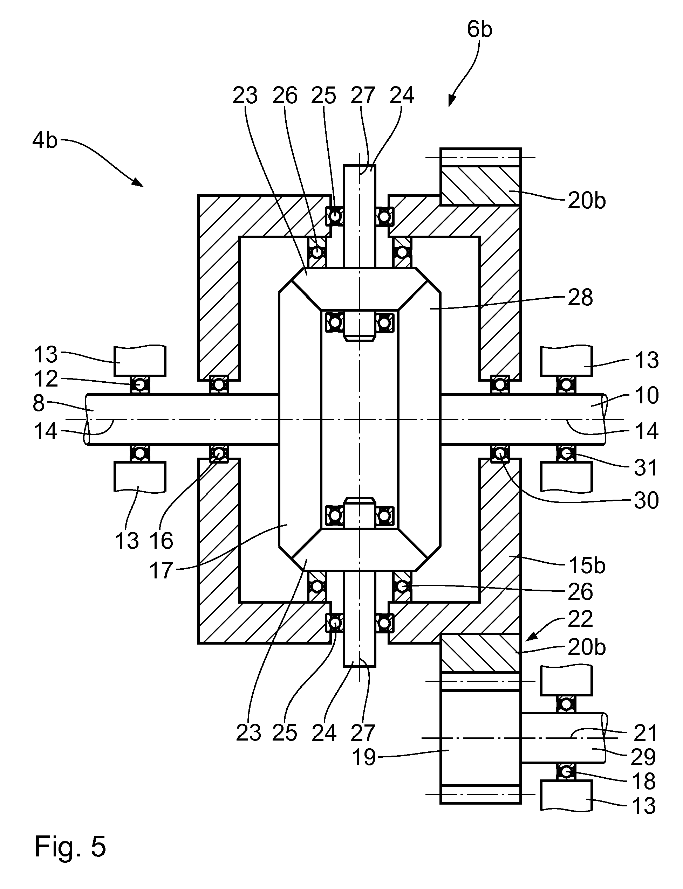

Nachfolgend wird unter Bezugnahme auf Fig. 5 ein drittes Ausführungsbeispiel der Erfindung beschrieben. Im Unterschied zu dem zweiten Ausführungsbeispiel ist die Eingangswelle 10 mit dem zweiten Kegelrad 28 und die Ausgangswelle 29 mit dem Zahnrad 19 verbunden. Hierdurch können einerseits die Antriebsmotoren 2 und 3 an gegenüberliegenden Seiten des Differenzial-Überlagerungsgetriebes 6b bzw. der Antriebsvorrichtung 4b angeordnet werden. Die Eingangswellen 8 und 10 sind um die erste Drehachse 14 drehantreibbar. Die Ausgangswelle 29 ist an dem Zahnrad 19 angeordnet und wird durch die Rotation des Differenzialkorbes 15b um die erste Drehachse 14 um die zweite Drehachse 21 drehangetrieben. Das Leistungsverzweigungsgetriebe 7 ist dementsprechend um den Abstand der Drehachsen 14 und 21 versetzt zu dem Differenzial-Überlagerungsgetriebe 6b angeordnet. Hinsichtlich der weiteren Funktionsweise wird auf die vorangegangenen Ausführungsbeispiele verwiesen.

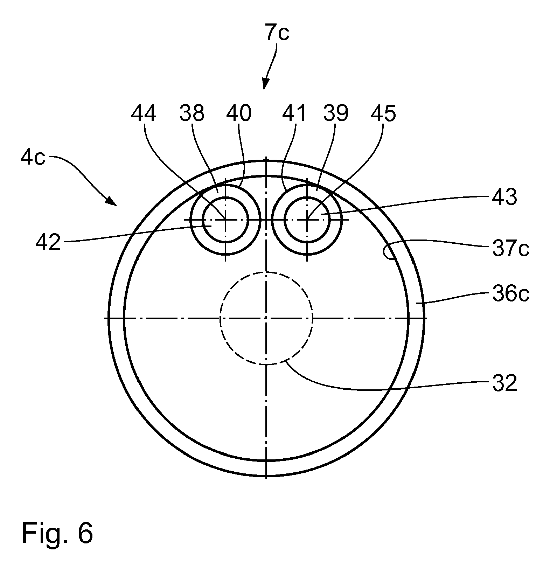

Nachfolgend wird unter Bezugnahme auf Fig. 6 ein viertes Ausführungsbeispiel der Erfindung beschrieben. Im Unterschied zu den vorangegangenen Ausführungsbeispielen ist das erste Leistungsverzweigungs-Zahnrad 36c als Hohlrad mit einer Innenverzahnung 37c ausgebildet. Die zweiten Leistungsverzweigungs-Zahnräder 38, 39 sind innerhalb des Hohlrades 36c angeordnet und mit ihrer Außenverzahnung 40, 41 in Eingriff mit der Innenverzahnung 37c. Hierdurch ist ein kompakterer Aufbau der Antriebsvorrichtung 4c bzw. des Leistungsverzweigungsgetriebes 7c möglich. Das Hohlrad 36c ist je nach Ausbildung des Differenzial-Überlagerungsgetriebes 6, 6a, 6b um die Drehachse 14 oder die Drehachse 21 drehantreibbar. Hinsichtlich der weiteren Funktionsweise wird auf die vorangegangenen Ausführungsbeispiele verwiesen.

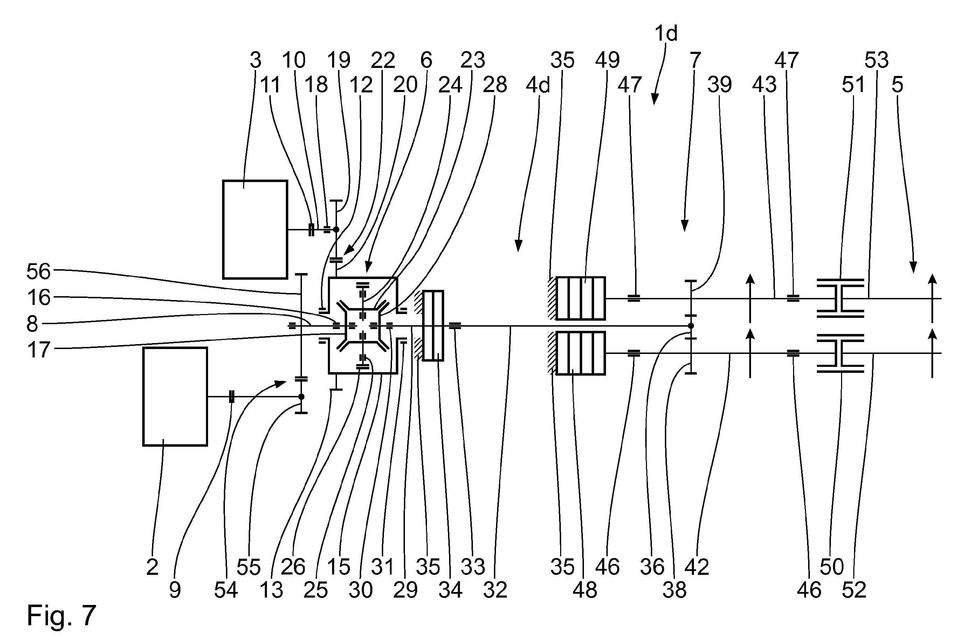

Nachfolgend wird unter Bezugnahme auf Fig. 7 ein fünftes Ausfühningsbeispiel der Erfindung beschrieben. Im Unterschied zu dem ersten Ausführungsbeispiel ist zwischen dem Haupt-Antriebsmotor 2 und dem Differenzial-Überlagerungsgetriebe 6 ein als Stirnradgetriebe ausgebildetes Reduziergetriebe 54 angeordnet. Das Reduziergetriebe 54 der Antriebsvorrichtung 4d weist ein Antriebs-Zahnrad 55 auf, das über die Kupplung 9 mit dem Haupt-Antriebsmotor 2 gekoppelt ist. Das Antriebs-Zahnrad 55 ist in Eingriff mit einem Abtriebs-Zahnrad 56, das mit der Eingangswelle 8 verbunden ist. Durch das Reduziergetriebe 54 wird die Drehzahl des Haupt-Antriebsmotors 2 reduziert, so dass eine wesentlich geringere Drehzahl der Schneckenwellen 52, 53 erzielt wird. Entsprechend wird über das als Reduziergetriebe ausgebildete Anpassgetriebe 22 die Drehzahl des Zusatz-Antriebsmotors 3 reduziert. Hinsichtlich der weiteren Funktionsweise wird auf die vorangegangenen Ausführungsbeispiele verwiesen.

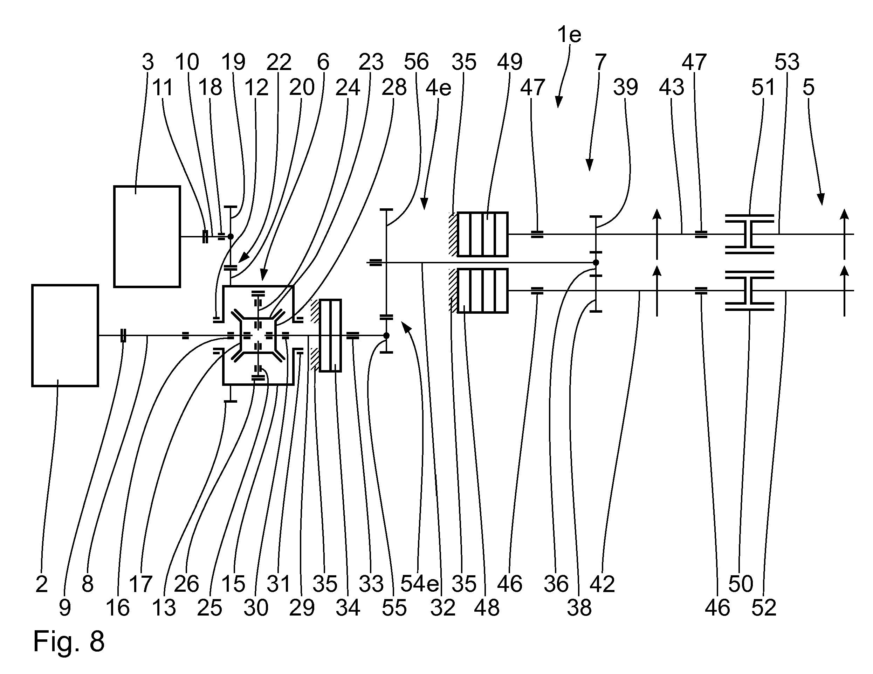

Nachfolgend wird unter Bezugnahme auf Fig. 8 ein sechstes Ausfühningsbeispiel der Erfindung beschrieben. Im Unterschied zu dem fünften Ausführungsbeispiel ist das Reduziergetriebe 54e der Antriebsvorrichtung 4e zwischen dem Differenzial-Überlageningsgetriebe 6 und dem Leistungsverzweigungsgetriebe 7 angeordnet. Hierzu ist das Antriebs-Zahnrad 55 mit der Ausgangswelle 29 und das Abtriebs-Zahnrad 56 mit der Eingangswelle 32 verbunden. Die Drehzahl der Eingangswelle 32 wird somit je nach Untersetzung im Vergleich zu der Drehzahl der Ausgangswelle 29 reduziert, so dass eine vergleichsweise geringe Drehzahl der Schneckenwellen 52, 53 erzielt wird. Hinsichtlich der weiteren Funktionsweise wird auf die vorangegangenen Ausführungsbeispiele verwiesen.

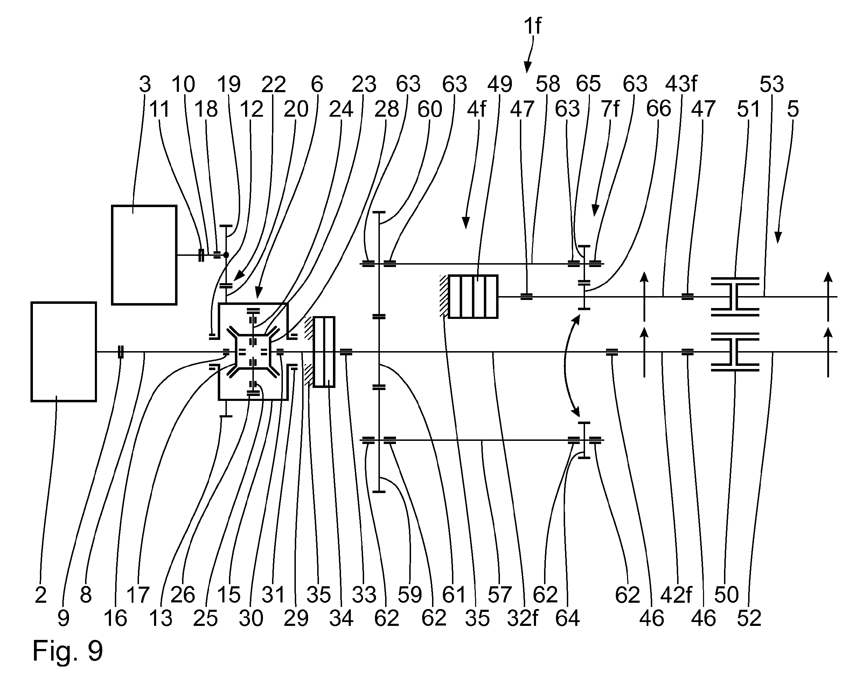

Nachfolgend wird unter Bezugnahme auf Fig. 9 ein siebtes Ausführungsbeispiel der Erfindung beschrieben. Das Leistungsverzweigungsgetriebe 7f der Antriebsvorrichtung 4f ist entsprechend dem in der DE 197 36 549 C2 beschriebenen Leistungsverzweigungsgetriebe ausgebildet. Die Eingangswelle 32f ist durchgehend ausgebildet und bildet dementsprechend gleichzeitig die Ausgangswelle 42f, die mit der Schneckenwelle 52 gekoppelt ist. Die Eingangswelle 32f kann einteilig mit der Ausgangswelle 29 ausgebildet sein oder eine separate Welle bilden, die mit der Ausgangswelle 29 verbunden ist. Die Ausgangswelle 42f ist um die erste Drehachse 14 drehantreibbar. Das Leistungsverzweigungsgetriebe 7f weist zwei Zweigwellen 57, 58 auf, die an einer dem Differenzial-Überlagerungsgetriebe 6 zugewandten Seite mit zugehörigen Zahnrädern 59, 60 verbunden sind. Die Zahnräder 59, 69 sind in Eingriff mit einem zentralen Zahnrad 61, das an der dem Differenzial-Überlageningsgetriebe 6 zugewandten Ende der Eingangswelle 32f angeordnet ist. Die Zweigwellen 57, 58 sind über zugehörige Radiallager 62, 63 an dem Getriebegehäuse 35 drehbar gelagert. An einem dem Doppelschneckenextruder 5 zugewandten Ende sind die Zweigwellen 57, 58 mit Zahnrädern 64, 65 verbunden, die in Eingriff mit einem Zahnrad 66 sind, das an der Leistungsverzweigungsgetriebe-Ausgangswelle 43f befestigt ist. Die Ausgangswelle 43f ist über das Radiallager 47 und das Axiallager 49 drehbar an dem Getriebegehäuse 35 gelagert. Die überlagerten Antriebsleistungen an der Ausgangswelle 29 bzw. der Eingangswelle 32f werden über die Zweigwellen 57, 58 gleichmäßig auf die Ausgangswellen 42f und 43f verteilt, wobei das Leistungsverzweigungsgetriebe 7f die Übersetzung 1 hat. Hinsichtlich der weiteren Funktionsweise wird auf die vorangegangenen Ausführungsbeispiele verwiesen.

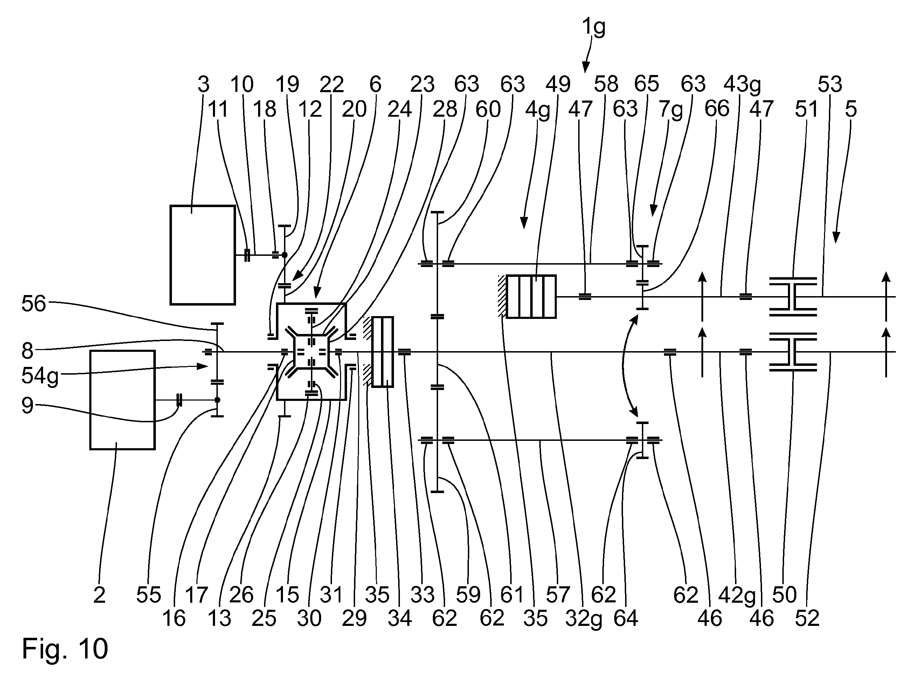

Nachfolgend wird unter Bezugnahme auf Fig. 10 ein achtes Ausführungsbeispiel der Erfindung beschrieben. Im Unterschied zu dem siebten Ausführungsbeispiel ist zwischen dem Haupt-Antriebsmotor 2 und dem Differenzial-Überlagerungsgetriebe 6 entsprechend dem fünften Ausführungsbeispiel ein Reduziergetriebe 54g angeordnet. Mit der Antriebsvorrichtung 4g kann somit die Drehzahl des Haupt-Antriebsmotors 2 reduziert werden, so dass eine vergleichsweise geringere Drehzahl der Schneckenwellen 52, 53 erzielt wird. Hinsichtlich der weiteren Funktionsweise wird auf die vorangegangenen Ausführungsbeispiele verwiesen.

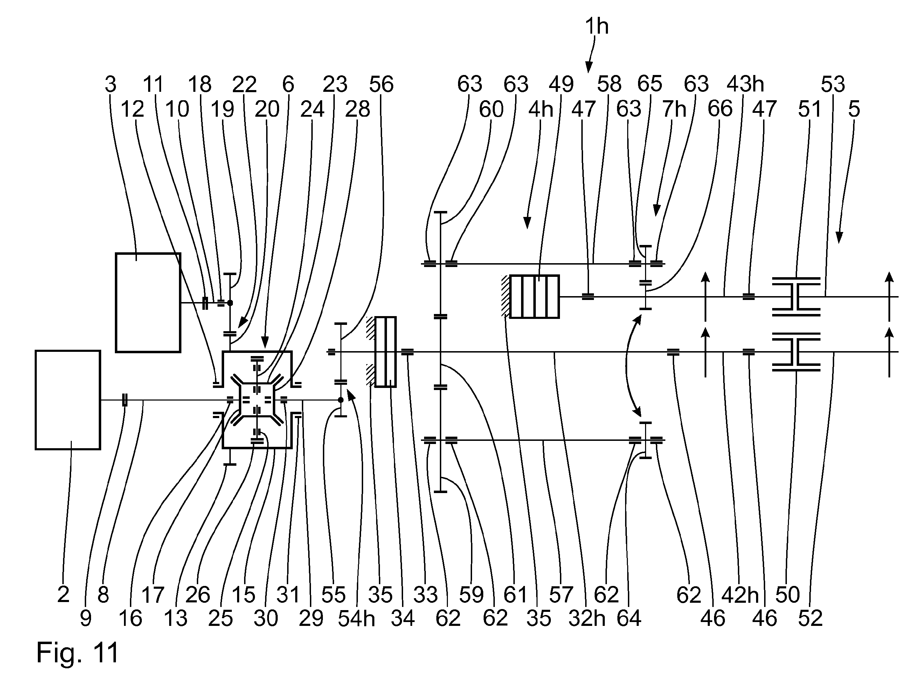

Nachfolgend wird unter Bezugnahme auf Fig. 11 ein neuntes Ausführungsbeispiel der Erfindung beschrieben. Im Unterschied zu dem siebten Ausführungsbeispiel ist zwischen dem Differenzial-Überlagerungsgetriebe 6 und dem Leistungsverzweigungsgetriebe 7h ein Reduziergetriebe 54h entsprechend dem sechsten Ausführungsbeispiel angeordnet. Mit der Antriebsvorrichtung 4h kann die Drehzahl der Eingangswelle 32h bzw. der Ausgangswellen 42h, 43h entsprechend der Untersetzung des Reduziergetriebes 54h reduziert werden. Hinsichtlich der weiteren Funktionsweise wird auf die vorangegangenen Ausführungsbeispiele verwiesen.

Prinzipiell können die Differenzial-Überlagerungsgetriebe 6, 6a, 6b, die Leistungsverzweigungsgetriebe 7, 7c, 7f, 7g, 7h und die Reduziergetriebe 54, 54e, 54g, 54h beliebig miteinander kombiniert werden. Die Übersetzungen bzw. Untersetzungen der Leistungsverzweigungsgetriebe 7, 7c, des Anpassgetriebes 22 und der Reduziergetriebe 54, 54e, 54g und 54h können je nach Bedarf gewählt werden.

## Patentansprüche

1. Antriebsvorrichtung für einen gleichsinnig drehantreibbaren Doppelschneckenextruder, umfassend:
- ein Überlagerungsgetriebe (6; 6a; 6b) zur Leistungsüberlagerung der Antriebsleistungen von zwei unterschiedlichen Antriebsmotoren (2, 3), mit
-- zwei Überlagerungsgetriebe-Eingangswellen (8, 10), welche von den zwei unterschiedlichen Antriebsmotoren (2, 3) drehantreibbar sind, und
-- einer Überlagerungsgetriebe-Ausgangswelle (29),
- ein Leistungsverzweigungsgetriebe (7; 7c; 7f; 7g; 7h) zur Leistungsverzweigung der an der Überlagerungsgetriebe-Ausgangswelle (29) überlagerten Antriebsleistungen, das zwei mit zwei Schneckenwellen (52, 53) eines Doppelschneckenextruders (5) koppelbare Leistungsverzweigungsgetriebe-Ausgangswellen (42, 43; 42f, 43f; 42g, 43g; 42h, 43h) aufweist,
**dadurch gekennzeichnet, dass**
das Überlagerungsgetriebe (6; 6a; 6b) als Differenzial-Überlagerungsgetriebe ausgebildet ist, wobei das Differenzial-Überlagerungsgetriebe (6; 6a; 6b) umfasst:
- einen Differenzialkorb (15; 15a; 15b),
- ein an dem Differenzialkorb (15; 15a; 15b) um eine erste Drehachse (14) drehbar gelagertes erstes Kegelrad (17),
- ein an dem Differenzialkorb (15; 15a; 15b) um die erste Drehachse (14) drehbar gelagertes zweites Kegelrad (28), das dem ersten Kegelrad (17) gegenüberliegend angeordnet ist, und
- mindestens drei Überlagerungs-Kegelräder (23),
-- die an dem Differenzialkorb (15; 15a; 15b) um jeweilige zweite Drehachsen (27) drehbar gelagert sind, wobei die zweiten Drehachsen (27) senkrecht zu der ersten Drehachse (14) verlaufen,
-- die das erste Kegelrad (17) und das zweite Kegelrad (28) miteinander koppeln, und
-- die rotationssymmetrisch um die erste Drehachse (14) angeordnet sind,
- ein Zahnrad (19), das mit dem Differenzialkorb (15; 15a; 15b) gekoppelt ist.

2. Antriebsvorrichtung nach Anspruch 1, **dadurch gekennzeichnet, dass** das Zahnrad (19) in Eingriff mit einer am Differenzialkorb (15; 15a; 15b) angeordneten Verzahnung (20; 20a; 20b) ist und insbesondere als Stirnrad ausgebildet ist.

3. Antriebsvorrichtung nach Anspruch 1 oder 2, **dadurch gekennzeichnet, dass** das Differenzial-Überlagerungsgetriebe (6; 6a; 6b) mindestens vier Überlagerungs-Kegelräder (23) aufweist.

4. Antriebsvorrichtung nach einem der Ansprüche 1 bis 3, **dadurch gekennzeichnet, dass**
- eines der Kegelräder (17) und das Zahnrad (19) mit jeweils einer der Überlagerungsgetriebe-Eingangswellen (8, 10) gekoppelt ist, und
- das andere der Kegelräder (28) mit der Überlagerungsgetriebe-Ausgangswelle (29) gekoppelt ist.

5. Antriebsvorrichtung nach einem der Ansprüche 1 bis 3, **dadurch gekennzeichnet, dass**
- die Kegelräder (17, 28) mit jeweils einer der Überlagerungsgetriebe-Eingangswellen (8, 10) gekoppelt sind, und
- das Zahnrad (19) mit der Überlagerungsgetriebe-Ausgangswelle (29) gekoppelt ist.

6. Antriebsvorrichtung nach einem der Ansprüche 1 bis 5, **dadurch gekennzeichnet, dass** das Differenzial-Überlagerungsgetriebe (6; 6a; 6b) zwischen dem ersten Kegelrad (17) und dem zweiten Kegelrad (28) sowie zwischen den mindestens drei Überlagerungs-Kegelrädern (23) und den Kegelrädern (17, 28) jeweils betragsmäßig eine Übersetzung von 1 aufweist.

7. Antriebsvorrichtung nach einem der Ansprüche 2 bis 6, **dadurch gekennzeichnet, dass** das Zahnrad (19) und die Verzahnung (20; 20a; 20b) ein Anpassgetriebe (22) zur Drehzahlanpassung ausbilden, das eine Übersetzung von ungleich 1 aufweist.

8. Antriebsvorrichtung nach Anspruch 7, **dadurch gekennzeichnet, dass** das Zahnrad (19) mit einer der Überlagerungsgetriebe-Eingangswellen (10) gekoppelt ist und mittels des Anpassgetriebes (22) eine Drehzahlanpassung derart erfolgt, dass die Drehzahl des Differenzialkorbes (15; 15a) kleiner als die Drehzahl des Zahnrades (19) ist.

9. Antriebsvorrichtung nach einem der Ansprüche 1 bis 8, **gekennzeichnet, durch** mindestens ein Reduziergetriebe (54; 54g), das zur Drehzahlreduktion der Drehzahl eines der Antriebsmotoren (2) über eine der Überlagerungsgetriebe-Eingangswellen (8) mit einem der Kegelräder (17) gekoppelt ist, wobei das mindestens eine Reduziergetriebe (54; 54g) insbesondere als Stirnradgetriebe ausgebildet ist.

10. Antriebsvorrichtung nach einem der Ansprüche 1 bis 9, **gekennzeichnet, durch** mindestens ein Reduziergetriebe (54e; 54h), das zur Drehzahlreduktion zwischen dem Differenzial-Überlagerungsgetriebe (6) und dem Leistungsverzweigungsgetriebe (7; 7h) angeordnet ist, wobei das mindestens eine Reduziergetriebe (54e; 54h) insbesondere als Stirnradgetriebe ausgebildet ist.

11. Antriebsvorrichtung nach einem der Ansprüche 1 bis 10, **dadurch gekennzeichnet, dass** das Leistungsverzweigungsgetriebe (7; 7c) eine Leistungsverzweigungsgetriebe-Eingangswelle (32) mit einem daran angeordneten ersten Leistungsverzweigungs-Zahnrad (36; 36c) aufweist, das mit zwei zweiten Leistungsverzweigungs-Zahnrädern (38, 39), die an den Leistungsverzweigungsgetriebe-Ausgangswellen (42, 43) angeordnet sind, gekoppelt ist.

12. Antriebsvorrichtung nach Anspruch 11, **dadurch gekennzeichnet, dass** das erste Leistungsverzweigungs-Zahnrad (36) als Stirnrad mit einer Außenverzahnung (37) ausgebildet ist.

13. Antriebsvorrichtung nach Anspruch 11, **dadurch gekennzeichnet, dass** das erste Leistungsverzweigungs-Zahnrad (36c) als Hohlrad mit einer Innenverzahnung (37c) ausgebildet ist.

14. Doppelschneckenextruder-Anordnung, mit
- einer Antriebsvorrichtung (4; 4a bis 4h) nach einem der Ansprüche 1 bis 13,
- einem Haupt-Antriebsmotor (2), der mit einer ersten Überlagerungsgetriebe-Eingangswelle (8) der Antriebsvorrichtung (4; 4a bis 4h) gekoppelt ist,
- einem Zusatz-Antriebsmotor (3), der mit einer zweiten Überlagerungsgetriebe-Eingangswelle (10) der Antriebsvorrichtung (4; 4a bis 4h) gekoppelt ist, und
- einem Doppelschneckenextruder (5), dessen Schneckenwellen (52, 53) mit zwei Leistungsverzweigungsgetriebe-Ausgangswellen (42, 43; 42f, 43f; 42g, 43g; 42h, 43h) der Antriebsvorrichtung (4; 4a bis 4h) gekoppelt und gleichsinnig drehantreibbar sind.

## Claims

1. Drive device for a twin-screw extruder which is drivable for rotation in the same direction, the drive device comprising
- a superimposition gear drive (6; 6a; 6b) for superimposing the driving powers of two different drive motors (2, 3), the superimposition gear drive (6; 6a; 6b) comprising
-- two superimposition gear drive input shafts (8, 10) which are drivable for rotation by the two different drive motors (2, 3); and
-- a superimposition gear drive output shaft (29);
- a power splitting gear drive (7; 7c, 7f; 7g; 7h) for splitting the driving powers which have been superimposed at the superimposition gear output shaft (29), the power splitting gear drive (7; 7c, 7f; 7g; 7h) comprising two power splitting gear drive output shafts (42, 43; 42f, 43f; 42g, 43g; 42h, 43h) which are couplable to two screw shafts (52, 53) of a twin-screw extruder (5),
**characterized in that**
the superimposition gear drive (6; 6a; 6b) is a differential superimposition gear drive, the differential superimposition gear drive (6; 6a; 6b) comprising:
- a differential cage (15; 15a; 15b);
- a bevel gear (17) which is mounted to the differential cage (15; 15a; 15b) for rotation about a first axis of rotation (14);
- a second bevel gear (28) which is arranged opposite to the first bevel gear (17) and is mounted to the differential cage (15; 15a; 15b) for rotation about the first axis of rotation (14); and
- at least three superimposition bevel gears (23)
-- which are mounted to the differential cage (15; 15a; 15b) for rotation about respective second axes of rotation (27), with the second axes of rotation (27) being perpendicular to the first axis of rotation (14);
-- which couple the first bevel gear (17) with the second bevel gear (28); and
-- which are arranged rotationally symmetrical about the first axis of rotation (14);
- a gear (19) which is coupled to the differential cage (15; 15a; 15b).

2. Drive device according to claim 1, **characterized in that** the gear (19) is in engagement with a tooth system (20; 20a; 20b) arranged at the differential cage (15; 15a; 15b) and is in particular a spur gear.

3. Drive device according to claim 1 or 2, **characterized in that** the differential superimposition gear drive (6; 6a; 6b) comprises at least four superimposition bevel gears (23).

4. Drive device according to one of claims 1 to 3, **characterized in that**
- one of the bevel gears (17) and the gear (19) are coupled to in each case one of the superimposition gear drive input shafts (8, 10); and
- the other one of the bevel gears (28) is coupled to the superimposition gear drive output shaft (29).

5. Drive device according to one of claims 1 to 3, **characterized in that**
- the bevel gears (17, 28) are coupled to in each case one of the superimposition gear drive input shafts (8, 10); and
- the gear (19) is coupled to the superimposition gear drive output shaft (29).

6. Drive device according to one of claims 1 to 5, **characterized in that** the differential superimposition gear drive (6; 6a; 6b) has a gear ratio with an absolute value of 1 between the first bevel gear (17) and the second bevel gear (28) and between the at least three superimposition bevel gears (23) and the bevel gears (17, 28).

7. Drive device according to one of claims 2 to 6, **characterized in that** the gear (19) and the tooth system (20; 20a; 20b) form an adjustment gear drive (22) for speed adjustment which has a gear ratio that is different from 1.

8. Drive device according to claim 7, **characterized in that** the gear (19) is coupled to one of the superimposition gear drive input shafts (10) and that a speed adjustment is performed using the adjustment gear drive (22) in such a way that the speed of the differential cage (15; 15a) is lower than the speed of the gear (19).

9. Drive device according to one of claims 1 to 8, **characterized by** at least one reduction gear drive (54; 54g) which is coupled, via one of the superimposition gear drive input shafts (8), to one of the bevel gears (17) for reducing the speed of one of the drive motors (2), with the at least one reduction gear drive (54; 54g) in particular being a spur gear drive.

10. Drive device according to one of claims 1 to 9, **characterized by** at least one reduction gear drive (54e; 54h) for speed reduction which is arranged between the differential superimposition gear drive (6) and the power splitting gear drive (7; 7h), with the at least one reduction gear drive (54e; 54h) in particular being a spur gear drive.

11. Drive device according to one of claims 1 to 10, **characterized in that** the power splitting gear drive (7; 7c) comprises a power splitting gear drive input shaft (32) with a first power splitting gear (36; 36c) arranged thereon which is coupled to two second power splitting gears (38, 39) which are arranged at the power splitting gear drive output shafts (42, 43).

12. Drive device according to claim 11, **characterized in that** the first power splitting gear (36) is a spur gear with an external tooth system (37).

13. Drive device according to claim 11, **characterized in that** the first power splitting gear (36c) is a hollow gear with an internal tooth system (37c).

14. Twin-screw extruder arrangement comprising
- a drive device (4; 4a to 4h) according to one of claims 1 to 13;
- a main drive motor (2) which is coupled to a first superimposition gear drive input shaft (8) of the drive device (4; 4a to 4h);
- an auxiliary drive motor (3) which is coupled to a second superimposition gear drive input shaft (10) of the drive device (4; 4a to 4h); and
- a twin-screw extruder (5) whose screw shafts (52, 53) are coupled to two power splitting gear drive output shafts (42, 43; 42f, 43f; 42g, 43g; 42h, 43h) of the drive device (4; 4a to 4h) and are drivable in the same direction.

## Revendications

1. Dispositif d'entraînement pour une extrudeuse à deux vis sans fin pouvant être entraînées en rotation dans le même sens, comprenant :
- une transmission à superposition (6 ; 6a ; 6b) servant à superposer les puissances d'entraînement de deux moteurs d'entraînement (2, 3) différents, pourvue
- - de deux arbres d'entrée de transmission à superposition (8, 10), qui peuvent être entraînés en rotation par les deux moteurs d'entraînement (2, 3) différents, et
- - d'un arbre de sortie de transmission à superposition (29),
- une transmission à dérivation de puissance (7 ; 7c ; 7f ; 7g ; 7h) servant à dériver les puissances d'entraînement superposées au niveau de l'arbre de sortie de transmission à superposition (29), laquelle présente deux arbres de sortie de transmission à dérivation de puissance (42, 43 ; 42f, 43f ; 42g, 43g ; 42h, 43h) pouvant être couplés à deux arbres de vis sans fin (52, 53) d'une extrudeuse à deux vis sans fin (5),
**caractérisé en ce**
**que** la transmission à superposition (6 ; 6a ; 6b) est réalisée sous la forme d'une transmission à superposition différentielle, sachant que la transmission à superposition différentielle (6 ; 6a ; 6b) comprend :
- une cage de différentiel (15 ; 15a ; 15b) ;
- un premier pignon conique (17) monté de manière à pouvoir tourner autour d'un premier axe de rotation (14) au niveau de la cage de différentiel (15 ; 15a ; 15b) ;
- un deuxième pignon conique (28) monté de manière à pouvoir tourner autour du premier axe de rotation (14) au niveau de la cage de différentiel (15 ; 15a ; 15b), lequel pignon conique est disposé de manière à faire face au premier pignon conique (17) ; et
- au moins trois pignons coniques à superposition (23), qui
- - sont montés de manière à pouvoir tourner autour de deuxièmes axes de rotation (27) respectifs au niveau de la cage de différentiel (15 ; 15a ; 15b), sachant que les deuxièmes axes de rotation (27) s'étendent de manière perpendiculaire par rapport au premier axe de rotation (14),
- - qui couplent l'un à l'autre le premier pignon conique (17) et le deuxième pignon conique (28), et
- - qui sont disposés de manière symétrique en rotation autour du premier axe de rotation (14),
- une roue dentée (19), qui est couplée à la cage de différentiel (15 ; 15a ; 15b).

2. Dispositif d'entraînement selon la revendication 1, **caractérisé en ce que** la roue dentée (19) est réalisée en prise avec une denture (20 ; 20a ; 20b) disposée au niveau de la cage de différentiel (15 ; 15a ; 15b) et est réalisée en particulier sous la forme d'une roue droite.

3. Dispositif d'entraînement selon la revendication 1 ou 2, **caractérisé en ce que** la transmission à superposition différentielle (6 ; 6a ; 6b) présente au moins quatre pignons coniques à superposition (23).

4. Dispositif d'entraînement selon l'une quelconque des revendications 1 à 3, **caractérisé en ce**
- **qu'**un des pignons coniques (17) et la roue dentée (19) sont couplés à respectivement un des arbres d'entrée de transmission à superposition (8, 10), et
- en ce que l'autre pignon conique (28) est couplé à l'arbre de sortie de transmission à superposition (29).

5. Dispositif d'entraînement selon l'une quelconque des revendications 1 à 3, **caractérisé en ce**
- **que** les pignons coniques (17, 28) sont couplés à respectivement un des arbres d'entrée de transmission à superposition (8, 10), et
- en ce que la roue dentée (19) est couplée à l'arbre de sortie de transmission à superposition (29).

6. Dispositif d'entraînement selon l'une quelconque des revendications 1 à 5, **caractérisé en ce que** la transmission à superposition différentielle (6 ; 6a ; 6b) présente, entre le premier pignon conique (17) et le deuxième pignon conique (28) ainsi qu'entre les trois pignons coniques à superposition (23) ou plus et les pignons coniques (17, 28) respectivement, en valeur absolue, une multiplication de 1.

7. Dispositif d'entraînement selon l'une quelconque des revendications 2 à 6, **caractérisé en ce que** la roue dentée (19) et la denture (20 ; 20a ; 20b) forment une transmission d'adaptation (22) servant à l'adaptation de la vitesse de rotation, laquelle présente une multiplication différente de 1.

8. Dispositif d'entraînement selon la revendication 7, **caractérisé en ce que** la roue dentée (19) est couplée à un des arbres d'entrée de transmission à superposition (10), et **en ce qu'**une adaptation de la vitesse de rotation est effectuée au moyen de la transmission d'adaptation (22) de telle manière que la vitesse de rotation de la cage de différentiel (15 ; 15a) est inférieure à la vitesse de rotation de la roue dentée (19).

9. Dispositif d'entraînement selon l'une quelconque des revendications 1 à 8, **caractérisé par** au moins une transmission de réduction (54 ; 54g), qui est couplée, aux fins de la réduction de la vitesse de rotation d'un des moteurs d'entraînement (2), à un des pignons coniques (17) par l'intermédiaire d'un des arbres d'entrée de transmission à superposition (8), sachant que la transmission de réduction (54 ; 54g) au moins au nombre de une est réalisée sous la forme d'un réducteur à roue droite.

10. Dispositif d'entraînement selon l'une quelconque des revendications 1 à 9, **caractérisé par** au moins une transmission de réduction (54e ; 54h), qui est disposée, aux fins de la réduction de la vitesse de rotation, entre la transmission à superposition différentielle (6) et la transmission à dérivation de puissance (7 ; 7h), sachant que la transmission de réduction (54e ; 54h) au moins au nombre de une est réalisée en particulier sous la forme d'un réducteur à roue droite.

11. Dispositif d'entraînement selon l'une quelconque des revendications 1 à 10, **caractérisé en ce que** la transmission à dérivation de puissance (7 ; 7c) présente un arbre d'entrée de transmission à dérivation de puissance (32) pourvu d'une première roue dentée de dérivation de puissance (36 ; 36c) disposée au niveau de l'arbre d'entrée, laquelle est couplée à deux deuxièmes roues dentées (38, 39) de dérivation de puissance, lesquelles sont disposées au niveau des arbres de sortie de transmission à dérivation de puissance (42, 43).

12. Dispositif d'entraînement selon la revendication 11, **caractérisé en ce que** la première roue dentée de dérivation de puissance (36) est réalisée sous la forme d'une roue droite pourvue d'une denture extérieure (37).

13. Dispositif d'entraînement selon la revendication 11, **caractérisé en ce que** la première roue dentée de dérivation de puissance (36c) est réalisée sous la forme d'une couronne pourvue d'une denture intérieure (37c).

14. Ensemble d'extrudeuse à deux vis sans fin, comprenant
- un dispositif d'entraînement (4 ; 4a à 4h) selon l'une quelconque des revendications 1 à 13,
- un moteur d'entraînement principal (2), qui est couplé à un premier arbre d'entrée de transmission à superposition (8) du dispositif d'entraînement (4 ; 4a à 4h),
- un moteur d'entraînement additionnel (3), qui est couplé à un deuxième arbre d'entrée de transmission à superposition (10) du dispositif d'entraînement (4 ; 4a à 4h), et
- une extrudeuse à deux vis (5), dont les arbres de vis sans fin (52, 53) sont couplés à deux arbres de sortie de transmission à dérivation de puissance (42, 43 ; 42f, 43f ; 42g, 43g ; 42h, 43h) du dispositif d'entraînement (4 ; 4a à 4h) et peuvent être entraînés en rotation dans le même sens.
